(19) Europäisches Patentamt / European Patent Office / Office européen des brevets

(11) **EP 3 462 766 B1**

(12) **EUROPEAN PATENT SPECIFICATION**

(45) Date of publication and mention
of the grant of the patent:
**04.11.2020  Bulletin 2020/45**

(51) Int Cl.:
*H04W 24/02* $^{(2009.01)}$   *H04W 24/04* $^{(2009.01)}$
*H04W 24/08* $^{(2009.01)}$   *H04W 84/12* $^{(2009.01)}$

(21) Application number: **17194190.9**

(22) Date of filing: **29.09.2017**

(54) **DETERMINING A BEHAVIOUR OF A WIRELESS DEVICE**

BESTIMMUNG DES VERHALTENS EINER DRAHTLOSEN VORRICHTUNG

DÉTERMINATION D'UN COMPORTEMENT D'UN DISPOSITIF SANS FIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**03.04.2019  Bulletin 2019/14**

(73) Proprietor: **Nokia Solutions and Networks Oy
02610 Espoo (FI)**

(72) Inventor: **Ligata, Amir
2018 Antwerpen (BE)**

(74) Representative: **IP HILLS NV
Hubert Frère-Orbanlaan 329
9000 Gent (BE)**

(56) References cited:
**WO-A2-01/73956     US-A1- 2016 232 352**

## Description

## Technical Field

The present invention generally relates, among others, to a network management device for analysing a wireless communication network, for example a Wi-Fi network.

## Background

Wireless communication networks, such as for example Wi-Fi networks, are continuously evolving in terms of number of devices simultaneously operating in the network. Moreover, since there is a trend of an increasing number of wireless devices in a communication network, this trend on his turn may obliges to increase even more the number of devices through the deployment of additional devices, such as access points, extenders and/or repeaters.

Each of these devices may be utilised by different users, may run a variety of applications and even have different purposes in the network, such as for example an access point versus an associated device connected to it. The devices may be characterized by a range of parameters, such as, for example, their purpose in the network, data consumption, operating frequency band, operating standards and so on. Furthermore, since end users have several degrees of freedom in the context of the communication network, devices may physically change location, connect over different frequency bands, connect to the network on a continuous or noncontinuous time period, and many other conducts. In other words, each device behaves differently within the wireless communication network.

The aggregation of individual behaviours of each of the devices separately defines the behaviour or character of the network as a whole. An individual behaviour, however, may cause or may have a particular problem, such as for example coverage or congestion problems. In this situation, corrective measures may be taken by the device itself causing or having the problem. At the same time, other devices in the network may take corrective measures as well. Anyhow, the behaviour of one or more devices in the network will be altered through the corrective measures, which on its behalf alters the behaviour of the network as a whole. Subsequently, other devices may start to suffer from novel problems due to this change of behaviour of the network.

WO 01/73956 A2 discloses a method and system for selective compensation for interference in a communications system by adapting the interference mitigation scheme applied in the communications system based on comparison with known patterns associated with particular types of interference, such as interference patterns typically exhibited by microwaves ovens, industrial equipment and wireless communication devices. A communications system detects interference and changes from a first interference mitigation scheme to a second interference mitigation scheme if the detected interference exhibits a pattern sufficiently correlated with a predetermined pattern associated with a predetermined type of interference.

US 2016/0232352 A1 discloses methods for detecting and responding to fake user interactions (UI) events. A processor may determine whether a user interaction event is a fake user interaction event by analysing raw data generated by one or more hardware drivers in conjunction with user interaction event information generated or received by a high-level operating system. In addition, the processor may be configured with to implement methods using behavioural analysis and machine learning techniques to identify, prevent, correct, or otherwise respond to malicious or performance-degrading behaviours of the computing device based on whether a detected user interaction event is an authentic or fake user interaction event.

## Summary

The reader is referred to the appended independent claims. Some preferred features are laid out in the dependent claims.

Since a change in an individual behaviour of a device in a network changes the behaviour of the network as a whole novel problems may be introduced in the network. This may lead to a chain of reactions whereby in alternating order behaviour of devices and of the network are changed, without assuring that initial problems are solved.

It is therefore an object of the present disclosure to solve the above problem and to provide a solution to determine a behaviour of a device in a wireless network and subsequently enhance the decision-making process for possible interventions.

This object is achieved, according to a first aspect, by a networking device determining a behaviour of a wireless device, STA, in a wireless communication network comprising:

- a collecting module configured to obtain a first set of metric data vectors for consecutive time periods; and wherein a metric data vector comprises a set of wireless device metrics associated with the respective time period; and
- a pattern analyzing module configured to mutually compare the first set of metric data vectors, thereby obtaining a behavioural pattern factor; and to classify the STA based on the behavioural pattern factor as a deterministic behavioural STA or a randomly behavioural STA.

In other words, prior to any intervention, a wireless device, STA, is classified. In order to do so, firstly, the collecting module obtains a first set of metric data vectors for consecutive time periods. A time period may, for example, be a day such that for consecutive days, for example during a week, a set of metric data vectors is collected or obtained. Each metric data vector comprises a wireless device metric associated with the respective time period. Such a wireless device metric may, for example, be a STA data consumption parameter, a STA mobility parameter, a STA roaming parameter, a STA connection parameter, a STA type parameter, a STA coverage parameter, a STA's user parameter and/or a STA usage parameter. All of these parameters may be used to determine a metric data vector or only a part of them. Obviously, within a set each vector has the same dimension. According to an embodiment, the parameters are standardized by the broadband forum TR-181 standard.

Next, the pattern analyzing module mutually compares the metric data vectors within the set. Based on this comparison of the consecutive metric data vectors within the set a behavioural pattern factor is obtained. If, for example, the vectors are represented as a matrix, the behavioural pattern factor may be calculated as the rank of such a matrix. Finally, based on this behavioural pattern factor, a wireless device is either classified as a deterministic behavioural or a randomly behavioural device.

By classifying STAs in the network as either deterministic or randomly behavioural devices, an improved overview or insight of the network is obtained. In other words, the way the network currently behaves is identified. In this way, any decision-making process may be co-ordinated more efficiently.

According to an aspect, the pattern analyzing module is further configured to derive from the first set of metric data vectors a uniqueness factor, a transition factor and an alternation factor and to determine the behavioural pattern factor based on the uniqueness factor, the transition factor and/or the alternation factor.

The uniqueness factor is indicative for a number of unique metric data vectors within the first set of metric data vectors.

The transition factor is indicative for variations between sequencing metric data vectors within the first set.

The alternation factor is indicative for variations of wireless device metrics between sequencing metric data vectors within the first set.

In other words, the pattern analyzing module determines how many unique metric data vectors there are in the first set, how many times the vectors change in sequencing order and/or how many changes there are of the wireless device metric when a vector changes. The behavioural pattern factor encloses these three factors, or even only one or two factors are enclosed. Thus, the behavioural pattern may be calculated in a straightforward way.

According to an aspect, the network management device further comprises a prediction module. This prediction module is configured to predict for the STA a future metric data vector.

On the one hand, as for a deterministic behavioural STA, the future metric data vector is predicted based on the first set of metric data vectors. Since, when prior to the prediction a STA is classified as deterministic behavioural, a future behaviour may be calculated based on the behaviour in the past.

On the other hand, as for a randomly behavioural STA, the future metric data vector is predicted based on a probabilistic approach. Thus, instead of solely predicting the future metric data vector based on the behaviour in the past, a probabilistic approach is applied in order to increase the reliability of the prediction.

The distinction made on how a future metric data vector is calculated for a deterministic behavioural versus a randomly behavioural STA, results in a more accurate prediction on how the network will behave as a whole.

According to an embodiment, the pattern analyzing module is further configured to compare the future metric data vector with a library of behavioural patterns in the wireless communication network. A behavioural pattern in the library comprises a set of metric data vectors and the future metric data vector is related to a respective behavioural pattern in the library when the future metric data vector is similar to the metric data vector of the respective behavioural pattern. As a result, a future behavioural pattern of the STA is obtained through the related metric data vector in the library.

In other words, a library or knowledge base comprises behavioural patterns of the wireless communication network. These behavioural patterns express how devices in the network behave or have behaved in the past. In order to describe and/or identify a behaviour, each of these behavioural patterns comprises a set of metric data vectors. Next, these metric data vectors are compared with the future metric data vector predicted for the STA. When a metric data vector in the library is similar to the future metric data vector, they are related to each other. Finally, the future behavioural of the STA obtained through the related metric data vector in the library describes how the STA will behave in the future.

An advantage to compare and subsequently to relate the future metric vector with a behavioural pattern in the library is that a more accurate forecast is made on how a STA will evolve in time and thus also how the communication network will evolve. In this way, the network management device may better anticipate the possible outcomes when corrective measures are taken.

According to an aspect, the library further comprises recommended settings related to respective behavioural patterns and the pattern analyzing module is further configured to relate a recommended setting, labelled as the related recommended setting, to the future behavioural pattern of the STA by the library.

A recommended setting may, for example, be a switching of a frequency band or a deployment of a repeater or an additional access point in the communication network. In other words, a recommended setting is an applied solution for a problem in a behavioural pattern. A behavioural pattern may be linked to more than one recommended setting.

The future metric data vector is linked to a behavioural pattern in the library, which on his turn is related to a recommended setting. Thus, in this way, the future metric data vector is also related to said recommended setting, labelled as the related recommended setting.

According to an aspect, the pattern analyzing module is further configured to acquire a current recommended setting from the STA, and to compare the current recommended setting with the related recommended setting, and to terminate the current recommended setting when it differs from the related recommended setting.

In other words, when the current recommended setting differs from the related one, this may indicate that a wrong current recommended setting is active. By terminating this current recommended setting, the network management device anticipates to a potential deterioration of functionalities within the network.

Alternatively, the related recommended setting may be applied. This may be either done after the termination of the current recommended setting, or even immediately without a prior verification of the current recommended setting.

According to a second aspect, the disclosure relates to a computer-implemented method for determining a behaviour of a wireless device, STA, in a wireless communication network comprising the steps of:

- obtaining a first set of metric data vectors for consecutive time periods; and wherein a metric data vector comprises a set of wireless device metrics associated with the respective time period; and
- mutually comparing the first set of metric data vectors, thereby obtaining a behavioural pattern factor; and
- classifying the STA based on the behavioural pattern factor as a deterministic behavioural STA or a randomly behavioural STA.

According to a third aspect, the disclosure relates to a computer program product comprising computer-executable instructions for performing the method according to the second aspect when the program is run on a computer.

According to a fourth aspect, the disclosure relates to a computer readable storage medium comprising the computer program product according to the third aspect.

**Brief Description of the Drawings**

Fig. 1 illustrates a communication network according to an embodiment of the invention; and

Fig. 2 illustrate a network management device according to an embodiment of the invention; and

Fig. 3 illustrates a set of metric data vectors according to an embodiment of the invention; and

Fig. 4 illustrates steps performed apply or terminate a recommended setting according to an embodiment of the invention; and

Fig. 5 illustrates a suitable computing system for performing steps according to various embodiments of the invention.

**Detailed Description of Embodiment(s)**

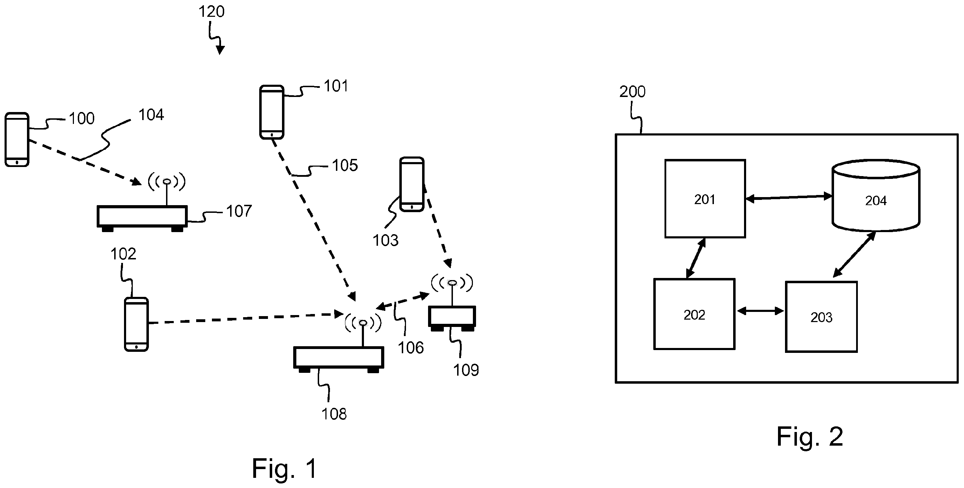

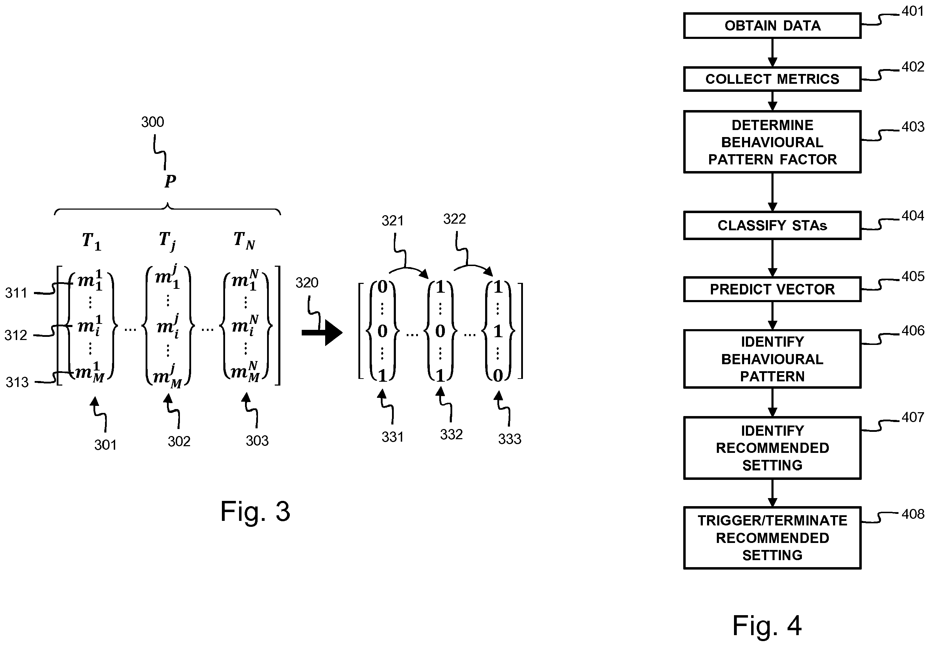

The present disclosure relates to a network device for determining a behaviour of a wireless device, STA, in a wireless communication network. Fig. 1 illustrates such a wireless communication network 120 and Fig. 2 illustrates such a network management device 200. Fig. 4 illustrates steps performed by the network management device 200 to determine a behaviour of a STA and subsequently to trigger or terminate a recommended setting.

The wireless communication network 120 comprises a multitude of devices, such as, for example, smartphones 100-103, access points 107-108 and a repeater 109. Each of these devices may be characterized by its functionality, purpose, running application and many more other aspects. Furthermore, end users of devices have several degrees of freedom within the communication network 120. Devices can physically change location, connect over different frequency bands, be connected or disconnected to the network 120, actively download or upload data through a wireless connection 104-105, and use different standards when transmitting or receiving to and from an access point 107-108 or repeater 109.

The way these devices in the communication network 120 behave may be identified by a device behaviour or device fingerprint. A device behaviour may be more or less random or deterministic. Nevertheless, the aggregation of the behaviours of each device in the network 120 defines the character of the network 120 as a whole.

Certain behaviour, however, may lead to one or more problems, such as congestion or coverage problems. In order to solve such a potential or present problem, corrective measures may be taken. Yet, since a device behaviour alteration may lead to a change in recommendation settings of other devices, it is important to determine in advance how a device may react on an alternation. Hence, it is important to define, assess, compute and/or predict the behaviour of a STA.

In order to determine the behaviour of a STA, the network management device 200 comprises a collecting module 201 which is configured to obtain 401 data, more in particular a set of metric data vectors. Such set of metric data vectors is illustrated in Fig. 3. The data may be obtained 401 for consecutive time periods, for example, a day. For each day, illustrated as $T_1$, $T_j$ and $T_N$, a metric vector is obtained, such as 301, 302 and 303. The set of metric vectors 300 may then comprises metric vectors which are obtained during a longer period $P$, for example a week.

A metric vector descriptive for a wireless device in the network 120 may comprise a number of different parameters, such as, for example,

- a STA data consumption parameter,
- a STA mobility parameter,
- a STA roaming parameter,
- a STA connection parameter,
- a STA type parameter,
- a STA coverage parameter,
- a STA's user parameter, and/or
- a STA usage parameter.

Alternatively, the metrics may also be standardized according to the broadband forum TR-181 standard. The metric may then comprise one of the following parameters:

- Device.WiFi.Radio.{i}.Stats.BytesSent,
- Device.WiFi.Radio.{i}.Stats.BytesReceived,
- Device.WiFi.Radio.{i}.OperatingFrequencyBand,
- Device.WiFi.Radio.{i}CCARequest,
- Device.WiFi.Radio.{i}CCAReport,
- Device.WiFi.Radio.{i}.Stast.ErrosSent,
- Device.WiFi.Radio.{i}.Stats.PacketsSent,
- Device.WiFi.SSID.{i}.Stats.RetransCount,
- Device.WiFi.SSID.{i}.Stats.FailedRetransCount,
- Device.WiFi.AccesPoint.{i}.AssociatedDeviceNumberOfEntries,
- Device.WiFi.NeighboringWiFiDiagnostic.Result.{i},
- Device.WiFi.AccesPoint.{i}.AC{i}.OutQLenHistogramIntervals,
- Device.WiFi.AccesPoint.{i}.AC{i}.Stats.OutQlenHistogram,
- Device.WiFi.AccesPoint.{j}.AssociatedDevice.{i}.SignalStrength,
- Device.WiFi.AccesPoint.{j}.AssociatedDevice.{i}.AuthenticationState,
- Device.WiFi.AccesPoint.{i}.Enable,
- Device.WiFi.AccesPoint.*.AssociatedDevice.*.Stats.BytesSent,
- Device.WiFi.AccesPoint.*.AssociatedDevice.*.Stats.BytesReceived,
- Device.WiFi.AccesPoint.*.AssociatedDevice.*.Stats.ErrorsSent,
- Device.WiFi.AccesPoint.*.AssociatedDevice.*.Stats.RetransCount.

Thus, the network management device 200 obtains through the collecting module 201 various parameters from one or more devices 100-103, 107-109, in the network 120 which respectively relates to a behaviour of a respective device during a time period. Thus, metric vector 301 for time period $T_1$ comprises, for example, $M$ metrics, such as $m_1^1$ 311, $m_i^1$ 312 and $m_M^1$ 313. Per device, a metric vector is obtained and collected 402 into a set 300.

Such a set of metric vectors 300 may also be transformed 320 in a binary form. When, for example one of the parameters, such as $m_1^1$ 311, is a STA mobility parameter, it may be set at one if the respective STA is stationary or zero when it is non-stationary. Other examples of parameters and there binary form are:

- for a STA data consumption parameter: one for light versus zero for heavy;
- for a STA roaming parameter: one for not-roaming versus zero for roaming;
- for a STA type parameter: one for operator versus zero for user; and/or
- for a STA coverage parameter: one for good versus zero for poor.

In other words, the set 300 comprising different parameters, and possibly each expressed in a particular dimension, is transformed 320 in a matrix comprises binary numbers, such as 331, 332 and 333.

Such a set is used to identify the behaviour of a respective STA. The metric data vectors, for example 331, 332 and 333, are mutually compared by the pattern analyzing module 202. In this way, a behavioural pattern factor is determined 403.

Such a behavioural pattern factor may be based on a number of unique vectors in the set, the uniqueness factor, a number of variations between sequencing 321, 322 metric data vectors within the set, the transition factor, and/or a number of variations of wireless device metrics between sequencing metric data vectors within the set, the alternation factor.

The determined 403 behavioural pattern factor identifies the behaviour of a STA. Next, a behavioural pattern factor of each device is used to classify 404 the devices or STAs. Based on the respective behavioural pattern, a STA may either be classified as deterministic behavioural or randomly behavioural.

Subsequently, a future metric data vector is predicted 405 for a STA by a prediction module 203. When a STA is classified 404 as deterministic behavioural, the future metric data vector is calculated based on the set of metric data vectors previously collected. On the other hand, when a STA is classified 404 as randomly behavioural, a future metric data vector is calculated by the use of a probabilistic approach.

Then, the predicted 405 future metric data vector is used to identify 406 a behavioural pattern of the respective STA. Therefore, the network management device 200 consults a library 204 or knowledge base. According to an embodiment, the library 204 may also be incorporated in the network management device 200. In order to identify 406 a behavioural pattern, the future metric vector is compared with metric data vectors in the library 204. In particular, the behavioural patterns in the library 204 are each referred by one or more metric data vectors. Thus, when the future metric data vector is similar to a metric data vector in the library 204, it is related to the behavioural pattern referring to said metric data vector. In this way, a future behavioural pattern of the STA is obtained.

According to an embodiment, the pattern analyzing module 202 is further configured to identify 407 or acquire a current recommended setting of STA. Such a recommended setting is, for example, a recommendation to switch a frequency band or, as another example, to deploy an additional repeater in the network 120.

In addition, the library 204 further comprises recommended settings related to respective behavioural patterns. The pattern analyzing module 201 is then further configured to relate a recommended setting in the library 204 to the future behavioural pattern of the STA.

Subsequently, the related recommended setting is compared with the current recommended setting of the STA. In the occurrence that the current recommended setting differs from the related recommended setting, the pattern analyzing 202 module terminates 408 the recommended setting.

Optionally, the pattern analyzing module 202 further applies or triggers the recommended setting to the STA.

Alternatively, the pattern analyzing module 202 immediately applies or triggers the related recommended setting without previously identifying or acquiring the current recommended setting of the STA.

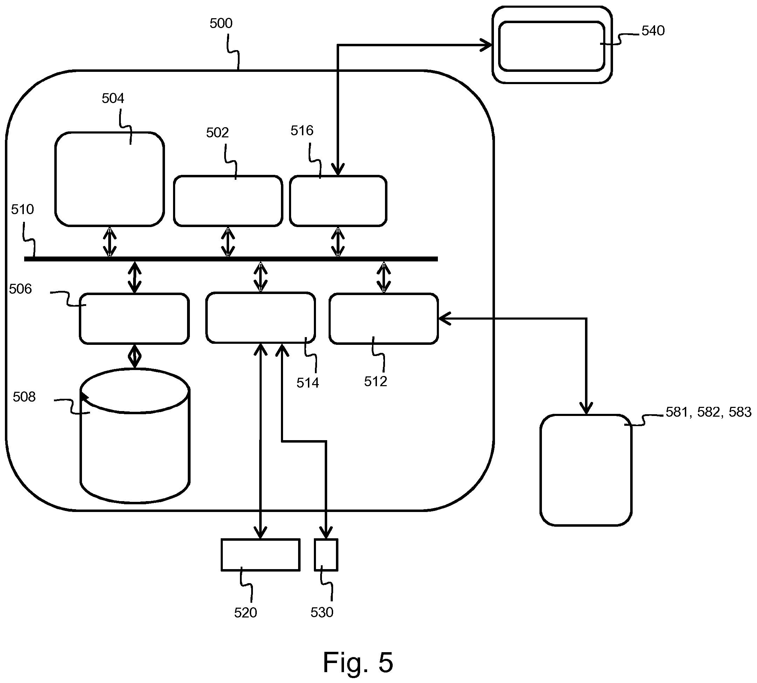

Fig. 5 shows details of the networking management device 200 according to a further embodiment of the invention. Networking management device 200 is suitable for performing the steps according to the above embodiments. Networking management device 200 may also be incorporated in or used as access point 107-108. Networking management device 200 may in general be formed as a suitable general purpose computer and comprise a bus 510, a processor 502, a local memory 504, one or more optional input interfaces 514, one or more optional output interfaces 516, a communication interface 512, a storage element interface 506 and one or more storage elements 508. Bus 510 may comprise one or more conductors that permit communication among the components of the networking management device 200. Processor 502 may include any type of conventional processor or microprocessor that interprets and executes programming instructions. Local memory 504 may include a random access memory (RAM) or another type of dynamic storage device that stores information and instructions for execution by processor 502 and/or a read only memory (ROM) or another type of static storage device that stores static information and instructions for use by processor 502. Input interface 514 may comprise one or more conventional mechanisms that permit an operator to input information to the networking management device 200, such as a keyboard 520, a mouse 530, a pen, voice recognition and/or biometric mechanisms, etc. Output interface 516 may comprise one or more conventional mechanisms that output information to the operator, such as a display 540, etc. Communication interface 512 may comprise any transceiver-like mechanism such as for example one or more Ethernet interfaces that enables networking management device 200 to communicate with other devices and/or systems, for example with access point 107 or 108. The communication interface 512 of networking management device 200 may be connected to such another networking device by means of a local area network (LAN) or a wide area network (WAN) such as for example the internet. Storage element interface 506 may comprise a storage interface such as for example a Serial Advanced Technology Attachment (SATA) interface or a Small Computer System Interface (SCSI) for connecting bus 510 to one or more storage elements 508, such as one or more local disks, for example SATA disk drives, and control the reading and writing of data to and/or from these storage elements 508. Although the storage elements 508 above is described as a local disk, in general any other suitable computer-readable media such as a removable magnetic disk, optical storage media such as a CD or DVD, -ROM disk, solid state drives, flash memory cards, ... could be used. The networking management device 200 described above can also run as a virtual machine above the physical hardware.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

**Claims**

1. A network management device (200) for determining a behaviour of a wireless device, STA, in a wireless communication network (120) comprising:

   - a collecting module (201) configured to obtain a first set of metric data vectors (301, 302, 303) for consecutive time periods; and wherein a metric data vector comprises a set of wireless device metrics (311, 312, 313) associated with a respective time period; and
   - a pattern analyzing module (202) configured to mutually compare the first set of metric data vectors, thereby obtaining a behavioural pattern factor; and to classify (404) the STA based on the behavioural pattern factor as a deterministic behavioural STA or a randomly behavioural STA.

2. The network management device (200) according to claim 1, wherein the pattern analyzing module (202) is further configured to derive from the first set of metric data vectors:

   - a uniqueness factor indicative for a number of unique metric data vectors within the first set of metric data vectors; and/or
   - a transition factor indicative for variations between sequencing metric data vectors within the first set; and/or
   - an alternation factor indicative for variations of wireless device metrics between sequencing metric data vectors within the first set; and

   to determine the behavioural pattern factor based on the uniqueness factor, the transition factor and/or the alternation factor.

3. The network management device (200) according to claim 2, further comprising a prediction module (203) configured to predict for the deterministic behavioural STA a future metric data vector based on the first set of metric data vectors.

4. The network management device (200) according to claim 3, wherein the prediction module (203) is further configured to predict for the randomly behavioural STA a future metric data vector based on a probabilistic approach.

5. The network management device (200) according to claim 3 and 4, wherein the pattern analyzing module (202) is further configured to compare the future metric data vector with a library (204) of behavioural patterns in the wireless communication network (120); and wherein a behavioural pattern comprises a set of metric data vectors; and to relate the future metric data vector to a respective behavioural pattern in the library (204) when the future metric data vector is similar to the metric data vector of the respective behavioural pattern; and thereby obtaining a future behavioural pattern of the STA.

6. The network management device (200) according to claim 5, wherein the library (204) further comprises recommended settings related to respective behavioural patterns; and wherein the pattern analyzing module (202) is further configured to relate a recommended setting, the related recommended setting, to the future behavioural pattern of the STA by the library (204).

7. The network management device (200) according to claim 6, wherein the pattern analyzing module (202) is further configured:

   - to acquire (407) a current recommended setting from the STA; and
   - to compare the current recommended setting with the related recommended setting; and
   - to terminate (408) the current recommended setting when it differs from the related recommended setting.

8. The network management device (200) according to claim 7, wherein the pattern analyzing module (202) is further configured to apply the related recommended setting to the STA.

9. The network management device (200) according to claim 6, wherein the pattern analyzing module (202) is further configured to apply the related recommended setting to the STA.

10. The network management device (200) according to claim 1, wherein the wireless device metrics comprise at least one of a group of:

    - a STA data consumption parameter; and
    - a STA mobility parameter; and
    - a STA roaming parameter; and
    - a STA connection parameter; and
    - a STA type parameter; and
    - a STA coverage parameter; and
    - a STA's user parameter; and

- a STA usage parameter.

11. The network management device (200) according to claim 10, wherein the parameters are standardized by the broadband forum TR-98/181 standard.

12. Method for determining a behaviour of a wireless device, STA, in a wireless communication network, the method performed by a network management device, and comprising the steps of:

- obtaining a first set of metric data vectors for consecutive time periods; and wherein a metric data vector comprises a set of wireless device metrics associated with a respective time period;
- mutually comparing the first set of metric data vectors, thereby obtaining a behavioural pattern factor; and
- classifying the STA based on the behavioural pattern factor as a deterministic behavioural STA or a randomly behavioural STA.

13. A computer program product comprising computer-executable instructions for performing the method according to claim 12 when the program is run on a computer.

14. A computer readable storage medium comprising the computer program product according to claim 13.

**Patentansprüche**

1. Netzwerkverwaltungsvorrichtung (200) zum Bestimmen eines Verhaltens einer drahtlosen Vorrichtung, STA, in einem drahtlosen Kommunikationsnetzwerk (120), die Folgendes umfasst:

- ein Sammelmodul (201), das dazu ausgelegt ist, einen ersten Satz von Metrikdatenvektoren (301, 302, 303) für aufeinanderfolgende Zeitperioden zu erhalten; und wobei ein Metrikdatenvektor einen Satz von Drahtlosvorrichtungsmetriken (311, 312, 313) umfasst, die mit einer jeweiligen Zeitperiode assoziiert sind; und
- ein Musteranalysemodul (202), das dazu ausgelegt ist, den ersten Satz von Metrikdatenvektoren gegenseitig zu vergleichen, dadurch Erhalten eines Verhaltensmusterfaktors; und die STA auf Basis des Verhaltensmusterfaktors als eine STA mit deterministischem Verhalten oder eine STA mit zufälligem Verhalten zu klassifizieren (404).

2. Netzwerkverwaltungsvorrichtung (200) nach Anspruch 1, wobei das Musteranalysemodul (202) ferner dazu ausgelegt ist, Folgendes vom Satz von Metrikdatenvektoren abzuleiten:

- einen Einmaligkeitsfaktor, der eine Reihe von einmaligen Metrikdatenvektoren im ersten Satz von Metrikdatenvektoren anzeigt; und/oder
- einen Übergangsfaktor, der Variationen zwischen einander folgenden Metrikdatenvektoren im ersten Satz anzeigt; und/oder
- einen Alternierungsfaktor, der Variationen von Drahtlosvorrichtungsmetriken zwischen einander folgenden Metrikdatenvektoren im ersten Satz anzeigt; und
den Verhaltensmusterfaktor auf Basis des Einmaligkeitsfaktors, des Übergangsfaktors und/oder des Alternierungsfaktors zu bestimmen.

3. Netzwerkverwaltungsvorrichtung (200) nach Anspruch 2, die ferner ein Vorhersagemodul (203) umfasst, das dazu ausgelegt ist, auf Basis des ersten Satzes von Metrikdatenvektoren einen künftigen Metrikdatenvektor für die STA mit deterministischem Verhalten vorherzusagen.

4. Netzwerkverwaltungsvorrichtung (200) nach Anspruch 3, wobei das Vorhersagemodul (203) ferner dazu ausgelegt ist, auf Basis eines probabilistischen Ansatzes einen künftigen Metrikdatenvektor für die STA mit zufälligem Verhalten vorherzusagen.

5. Netzwerkverwaltungsvorrichtung (200) nach Anspruch 3 und 4, wobei das Musteranalysemodul (202) ferner dazu ausgelegt ist, den künftigen Metrikdatenvektor mit einer Bibliothek (204) von Verhaltensmustern im drahtlosen Kommunikationsnetzwerk (120) zu vergleichen; und wobei ein Verhaltensmuster einen Satz von Metrikdatenvektoren umfasst; und den künftigen Metrikdatenvektor mit einem jeweiligen Verhaltensmuster in der Bibliothek (204) zu verknüpfen, wenn der künftige Metrikdatenvektor dem Metrikdatenvektor des jeweiligen Verhaltensmusters ähnlich ist; und dadurch Erhalten eines künftigen Verhaltensmusters des STA.

6. Netzwerkverwaltungsvorrichtung (200) nach Anspruch 5, wobei die Bibliothek (204) ferner empfohlene Einstellungen umfasst, die mit jeweiligen Verhaltensmustern verknüpft sind; und wobei das Musteranalysemodul (202) ferner dazu ausgelegt ist, eine empfohlene Einstellung, die verknüpfte empfohlene Einstellung, durch die Bibliothek (204) mit dem künftigen Verhaltensmuster der STA zu verknüpfen.

7. Netzwerkverwaltungsvorrichtung (200) nach Anspruch 6, wobei das Musteranalysemodul (202) ferner zu Folgendem ausgelegt ist:

- Erfassen (407) einer aktuellen empfohlenen Einstellung von der STA. und

- Vergleichen der aktuellen empfohlenen Einstellung mit der verknüpften empfohlenen Einstellung; und

- Beenden (408) der aktuellen empfohlenen Einstellung, wenn sie sich von der verknüpften empfohlenen Einstellung unterscheidet.

**8.** Netzwerkverwaltungsvorrichtung (200) nach Anspruch 7, wobei das Musteranalysemodul (202) ferner dazu ausgelegt ist, die verknüpfte empfohlene Einstellung auf die STA anzuwenden.

**9.** Netzwerkverwaltungsvorrichtung (200) nach Anspruch 6, wobei das Musteranalysemodul (202) ferner dazu ausgelegt ist, die verknüpfte empfohlene Einstellung auf die STA anzuwenden.

**10.** Netzwerkverwaltungsvorrichtung (200) nach Anspruch 1, wobei die Drahtlosvorrichtungsmetriken mindestens eines von einer Gruppe von Folgendem umfassen:

- einen STA-Datenverbrauchsparameter; und
- einen STA-Mobilitätsparameter; und
- einen STA-Roamingparameter; und
- einen STA-Verbindungsparameter; und
- einen STA-Typparameter; und
- einen STA-Abdeckungsparameter; und
- Parameter eines STA-Benutzers; und
- einen STA-Verwendungsparameter.

**11.** Netzwerkverwaltungsvorrichtung (200) nach Anspruch 10, wobei die Parameter durch die Norm TR-98/181 des Breitbandforums standardisiert sind.

**12.** Verfahren zum Bestimmen eines Verhaltens einer drahtlosen Vorrichtung, STA, in einem drahtlosen Kommunikationsnetzwerk, wobei das Verfahren von einer Netzwerkverwaltungsvorrichtung durchgeführt wird und die folgenden Schritte umfasst:

- Erhalten eines ersten Satzes von Metrikdatenvektoren für aufeinanderfolgende Zeitperioden; und wobei ein Metrikdatenvektor einen Satz von Drahtlosvorrichtungsmetriken umfasst, die mit einer jeweiligen Zeitperiode assoziiert sind;
- gegenseitiges Vergleichen des ersten Satzes von Metrikdatenvektoren, dadurch Erhalten eines Verhaltensmusterfaktors; und
- Klassifizieren der STA auf Basis des Verhaltensmusterfaktors als eine STA mit deterministischem Verhalten oder eine STA mit zufälligem Verhalten.

**13.** Computerprogrammprodukt, das computerausführbare Anweisungen zum Durchführen des Verfahrens nach Anspruch 12, wenn das Programm auf einem Computer ausgeführt wird, umfasst.

**14.** Computerlesbares Speichermedium, das das Computerprogrammprodukt nach Anspruch 13 umfasst.

**Revendications**

**1.** Dispositif de gestion de réseau (200) destiné à déterminer un comportement d'un dispositif sans fil, STA, dans un réseau de communication sans fil (120) qui comprend :

- un module de collecte (201) configuré pour obtenir un premier jeu de vecteurs de données métriques (301, 302, 303) pour des périodes de temps consécutives ; et dans lequel un vecteur de données métriques comprend un jeu de métriques de dispositif sans fil (311, 312, 313) associé à une période de temps respective, et
- un module d'analyse de modèle (202) configuré pour comparer mutuellement le premier jeu de vecteurs de données métriques, obtenant ainsi un facteur de modèle comportemental ; et pour classer (404) le STA sur la base du facteur de modèle comportemental en tant que STA comportemental déterministe ou STA comportemental aléatoire.

**2.** Dispositif de gestion de réseau (200) selon la revendication 1, dans lequel le module d'analyse de modèle (202) est en outre configuré pour dériver du premier jeu de vecteurs de données métriques :

- un facteur d'unicité indicatif d'un nombre de vecteurs de données métriques uniques à l'intérieur du premier jeu de vecteurs de données métriques ; et/ou
- un facteur de transition indicatif de variations entre des vecteurs de données métriques de séquençage à l'intérieur du premier jeu ; et/ou
- un facteur d'alternance indicatif de variations de métriques de dispositif sans fil entre des vecteurs de données métriques de séquençage à l'intérieur du premier jeu ; et

pour déterminer le facteur de modèle comportemental sur la base du facteur d'unicité, du facteur de transition et/ou du facteur d'alternance.

**3.** Dispositif de gestion de réseau (200) selon la revendication 2, qui comprend en outre un module de prédiction (203) configuré pour prédire pour le STA comportemental déterministe un futur vecteur de données métriques sur la base du premier jeu de vecteurs de données métriques.

**4.** Dispositif de gestion de réseau (200) selon la revendication 3, dans lequel le module de prédiction (203) est en outre configuré pour prédire pour le STA comportemental aléatoire un futur vecteur de données métriques sur la base d'une approche probabiliste.

**5.** Dispositif de gestion de réseau (200) selon la revendication 3 et 4, dans lequel le module d'analyse de modèle (202) est en outre configuré pour comparer le futur vecteur de données métriques avec une librairie (204) de modèles comportementaux dans le réseau de communication sans fil (120) ; et dans lequel un modèle comportemental comprend un jeu de vecteurs de données métriques ; et pour apparenter le futur vecteur de données métriques à un modèle comportemental respectif dans la librairie (204) lorsque le futur vecteur de données métriques est similaire au vecteur de données métriques du modèle comportemental respectif ; et obtenant ainsi un futur modèle comportemental du STA.

**6.** Dispositif de gestion de réseau (200) selon la revendication 5, dans lequel la librairie (204) comprend en outre des réglages recommandés apparentés à des modèles comportementaux respectifs ; et dans lequel le module d'analyse de modèle (202) est en outre configuré pour apparenter un réglage recommandé, le réglage recommandé apparenté, au futur modèle comportemental du STA par la librairie (204).

**7.** Dispositif de gestion de réseau (200) selon la revendication 6, dans lequel le module d'analyse de modèle (202) est en outre configuré :

    - pour acquérir (407) un réglage recommandé en cours depuis le STA ; et
    - pour comparer le réglage recommandé en cours au réglage recommandé apparenté ; et
    - pour interrompre (408) le réglage recommandé en cours lorsqu'il diffère du réglage recommandé apparenté.

**8.** Dispositif de gestion de réseau (200) selon la revendication 7, dans lequel le module d'analyse de modèle (202) est en outre configuré pour appliquer le réglage recommandé apparenté au STA.

**9.** Dispositif de gestion de réseau (200) selon la revendication 6, dans lequel le module d'analyse de modèle (202) est en outre configuré pour appliquer le réglage recommandé apparenté au STA.

**10.** Dispositif de gestion de réseau (200) selon la revendication 1, dans lequel les métriques du dispositif sans fil comprennent au moins l'un d'un groupe de :

    - un paramètre de consommation de données STA ; et
    - un paramètre de mobilité STA ; et
    - un paramètre d'itinérance STA ; et

    - un paramètre de connexion STA ; et
    - un paramètre de type STA ; et
    - un paramètre de couverture STA ; et
    - un paramètre d'utilisateur de STA ; et
    - un paramètre d'usage STA.

**11.** Dispositif de gestion de réseau (200) selon la revendication 10, dans lequel les paramètres sont standardisés par le modèle Forum haut débit TR-98/181.

**12.** Procédé destiné à déterminer un comportement d'un dispositif sans fil, STA, dans un réseau de communication sans fil, le procédé mis en œuvre par un dispositif de gestion de réseau et qui comprend les étapes de :

    - obtention d'un premier jeu de vecteurs de données métriques pour des périodes de temps consécutives ; et dans lequel un vecteur de données métriques comprend un jeu de métriques de dispositif sans fil associé à une période de temps respective ;
    - comparaison mutuelle du premier jeu de vecteurs de données métriques, obtenant ainsi un facteur de modèle comportemental ; et
    - classement du STA sur la base du facteur de modèle comportemental en tant que STA comportemental déterministe ou STA comportemental aléatoire.

**13.** Produit de programme informatique qui comprend des instructions exécutables par un ordinateur pour mettre en œuvre le procédé selon la revendication 12 lorsque le programme est exécuté sur un ordinateur.

**14.** Support de stockage lisible par ordinateur qui comprend le produit de programme informatique selon la revendication 13.

Fig. 2

Fig. 1

$$P = \begin{bmatrix} \begin{Bmatrix} m_1^1 \\ \vdots \\ m_i^1 \\ \vdots \\ m_M^1 \end{Bmatrix} & \cdots & \begin{Bmatrix} m_1^j \\ \vdots \\ m_i^j \\ \vdots \\ m_M^j \end{Bmatrix} & \cdots & \begin{Bmatrix} m_1^N \\ \vdots \\ m_i^N \\ \vdots \\ m_M^N \end{Bmatrix} \end{bmatrix} \rightarrow \begin{bmatrix} \begin{Bmatrix} 0 \\ \vdots \\ 0 \\ \vdots \\ 1 \end{Bmatrix} & \cdots & \begin{Bmatrix} 1 \\ \vdots \\ 0 \\ \vdots \\ 1 \end{Bmatrix} & \cdots & \begin{Bmatrix} 1 \\ \vdots \\ 1 \\ \vdots \\ 0 \end{Bmatrix} \end{bmatrix}$$

Fig. 3

OBTAIN DATA — 401

COLLECT METRICS — 402

DETERMINE BEHAVIOURAL PATTERN FACTOR — 403

CLASSIFY STAs — 404

PREDICT VECTOR — 405

IDENTIFY BEHAVIOURAL PATTERN — 406

IDENTIFY RECOMMENDED SETTING — 407

TRIGGER/TERMINATE RECOMMENDED SETTING — 408

Fig. 4

EP 3 462 766 B1

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0173956 A2

- US 20160232352 A1